# EUROPEAN PATENT APPLICATION

(11) **EP 3 872 040 A1**
(43) Date of publication of application: **01.09.2021**
(21) Application number: 21159115.1
(22) Date of filing: 24.02.2021
(51) Int. Cl.: C03B 27/04

(54) **EFFECTIVE GLASS HEATING PROCESS HEATING CONVECTION AIR INTO MATRIX CONFIGURATIOIN**

(30) Priority: 27.02.2020 FI 20200015; 28.09.2020 FI 20200070; 18.01.2021 FI 20210004; 01.02.2021 FI 20210006
(71) Applicant: Feracitas Oy, 33720 Tampere (FI)
(72) Inventor: Nikander, Risto, 33720 Tampere (FI)
(74) Representative: Sarap, Margus

(57) **Abstract**

The glass heating machine according to present invention includes nozzle boxes (NB) which are about as long as the matrix. The heater (H) radiates heat all round it, including part (S), which gets hot and will be called heat transfer plate from now on. Convection air (CA) gets heated by convection on heat transfer plate. After the first heating the convection air arrives into the radiation heated part (RAD) which includes very hot air. The convection air (CA) is heated in said radiation hested part again, the airs get mixed. After this said mixed air is blown onto the glass (G) as a very hot convection jets (CJ).

## Description

### Technical field

The present invention relates to the heating process of the convection air in glass tempering process and furnance, and more psrticularly to process in which the heater heats the heat transfer plate and the convection air is heated by convection through the heat transfer plate.

### Background art

The first very effective glass tempering process and machine was descibed in patent document US6,470,711 B1, Jouko Jarvinen et al, 29.10.2002. It had capacity about 22 loads/hour for 5 mm glass with glass emissivity of 0,02. It had furnace long electrical resistors (15). They radiated heat all around it, down and downwards to the radiating panels 13, upwards and sides to the reflecting plates 16 which were supposed to reflect the radiation downward, to the radiation panels and also to the sides of the nozzle boxes. The radiating panels were intended to radiate on to the glass. The convection heating air nozzles were machined onto the radiating panels. The technology was named CONVAIR (Convection And Irradiation) heating system. See in addition publication "Convair combined irradiation and convection process", Jouko Jarvinen et al, Glass-Technology International 6/1996, pages 276-280, www.glassonline.com.

However, the radiation was very weak for the increase of the capacity as the convection air flushed radiating panels. The real reason for the high capacity was that the reflecting plates (16) were really working as heat transfer plates (S) to heat the convection air. The second reason for the high capacity was that the convection air (CA) was mixed with the very hot air in between the heaters and radiating panels.

Later there was a patent document US2006/207292 A1, Glassrobots OY, 21.09.2006 which was a copy of the patent US6,470,711 B1 but without radiating panels and also with long heaters. The convection air volume was doubled but the capacity was the same as in CONVAIR solution. The reason was, that the convection air "flushed" the heaters directly so the convection area was smaller and the radiation was excluded.

Later this technology was more proved by patent US8,618,442 B2, Glaston Services Ltd. Oy, 31.12.2013 which prevented radiation as convection air flushed heaters and there was no radiation downwards. The capacity was only 16 loads/hour the same glass as in CONVAIR solution, but however, 2,5 times more convection power for convection blower motors. In this design the heaters are inside of the nozzle boxes which is troublesome when the heaters need to be changed. The nozzle boxes are arranged into a small angle compared to the glass travel direction. This eliminates optical problems in glass, including iridescence.

The manufacturing of patents US6470711 and US2006207292 was finished as an expensive design and they were also very difficult to serve, (especially change the heaters). One reason why they were expensive to manufacture is that for the high capacity the nozzle boxes need to be narrow, thus they need to be many. The thermocouples were for each nozzle box and heater.

Later so-called matrix heating became popular since it heats the glass into the more uniform temperature. The matrix lengths are normally 1000 mm +/- 300 mm in glass travel direction. The matrix widths are normally 250 - 400 mm. For patents US6470711 and US2006207292 the length was as long as the furnace heating length and width was only 120 mm. This included only one heater. Normally the matrix width includes 2 - 4 heaters. Each matrix temperature is controlled by the thermocouple or 2 two of them. For example, patent US8,618,442 B2 describes a matrix controlled heating system made of short nozzle boxes. The nozzle boxes are wider in order to reduce manufacturing costs. One nozzle box includes 2 heaters according to the patent. Wide nozzle boxes cause congestion of convection air between the glass and the nozzles and reduce capacity.

The tempering machine manufacturers have used higher air volumes to make the convection efficiency higher, to increase the capacity. This causes convection air congestion under the nozzles and above the glass. This is bad because the air congestion reduces the speed of the jets impacting the glass. This makes the capacity of the machine lower.

The most practical way to make the convection heating is to use a convection unit which have a length of 900 mm +/- 300 mm length. The number of them depends on the length of the furnace. Each convection unit has 1 or 2 convection blowers. The convection air must be heated into the matrix configuration. The convection unit is at least as long as the matrix. In between the convection units there are gaps for heater and thermocouple wires.

### Summary of the invention

The present solution illustrated in Fig. 1 solves the misunderstanding and expense of patent US6,470,711B1. It also solves the mistakes made in patents US6,470,711 and US2006/207292.

The glass heating machine according to present invention includes nozzle boxes (NB) which are about as long as the matrix. The nozzle boxes are made of hot resistant sheet metal. The nozzle (NO) can be cheaply made in a "face" (OP) of the nozzle box. The heater (H) radiates heat all round it, including part (S), which gets hot and will be called heat transfer plate from now on. Convection air (CA) gets heated by convection on heat transfer plate. After the first heating the convection air arrives into the radiation heated part (RAD) which includes very hot air. The convection air (CA) is heated in said radiation hested part again, the airs get mixed. After this said mixed air is blown onto the glass (G) as a very hot convection jets (CJ).

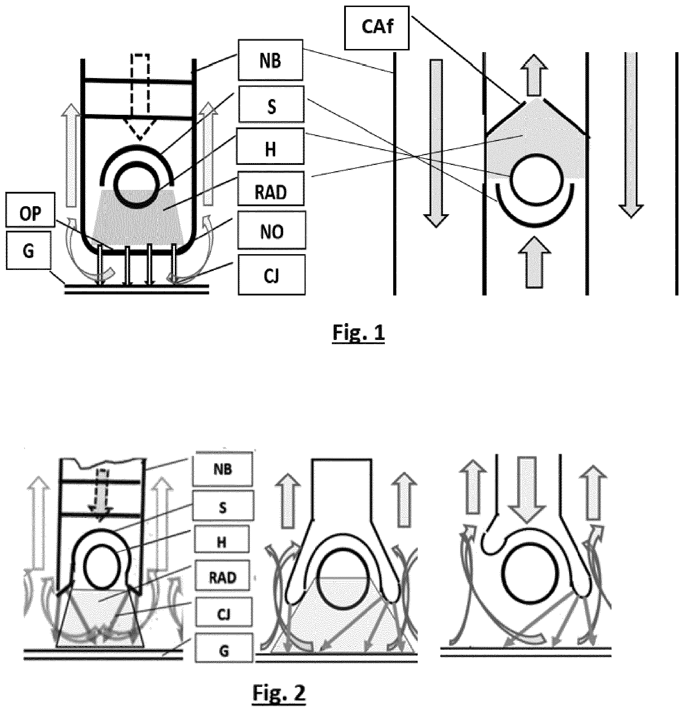

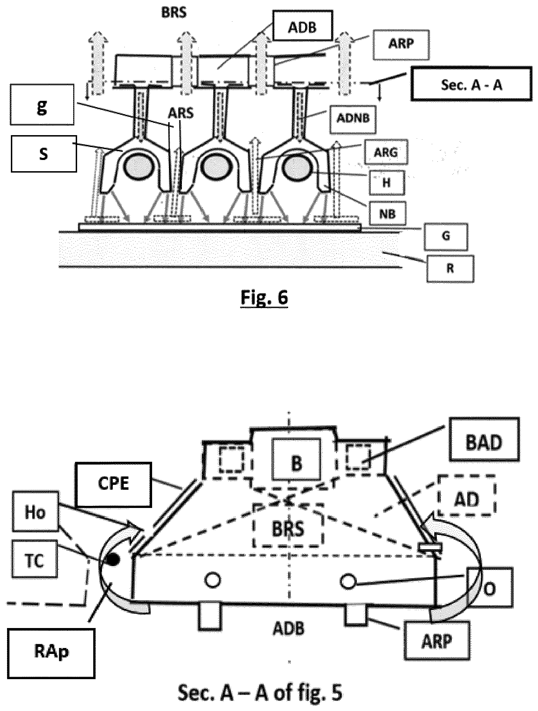

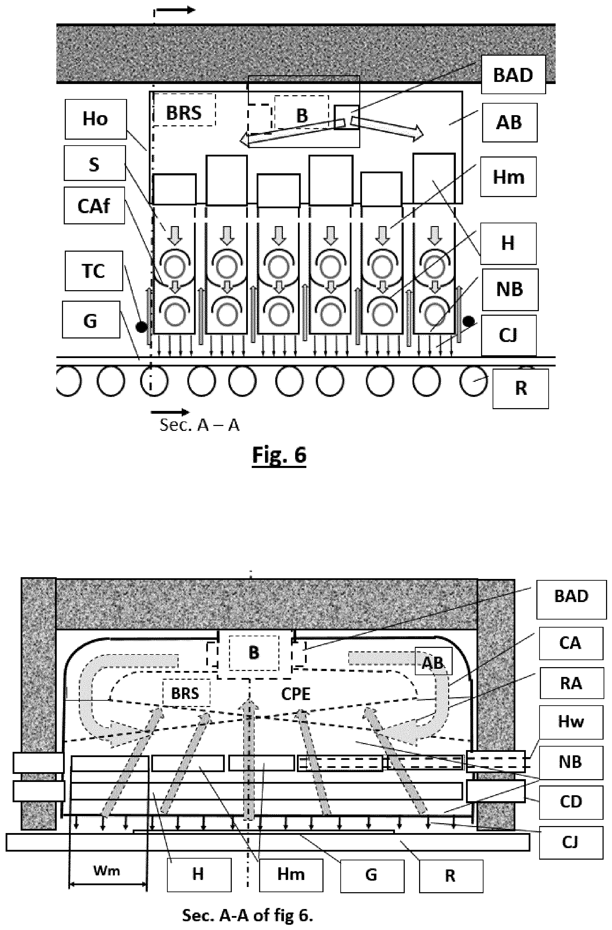

The similar system works also in return air flow but not as effectively as in the pressure side. The pressure loss should be considered. Instead of nozzles the radiation heat should be collected with Convection Air funnel (CAf) type arrangement. The Fig. 1 example of CAf type arrangement is in between two nozzle boxes. The same is shown in Fig. 6 for the pressure side. For example before blower intake could be another suitable place. Similar system can be used for heating of convection air for other purposes than glass tempering with practically no pressure loss.

Fig. 2 clarifies another method using the above novel idea. The nozzle box (NB) includes in the central a hollow type space made for the heater (H). The heat transfer plate (S) now forms part of the "face" of the nozzle. The heater is outside of the nozzle box. It can be changed easily as it is not inside of the nozzle box. The first heating stage is at least almost identical to what is explained under Fig. 1. The convection jets (CJ) pass through the radiation heated area (RAD). They have high speed; they heat more in the radiation heated very hot air and grasp this hot air with them. Furthermore, the convection jets impinge on the radiation heated glass surface. This creates a very high heat transfer coefficient. It means that also low emissivity is heated extremely fast by this method.

There can be many variations used for this application. Fig. 2 shows the basics of the present invention.

Fig, 3 shows a cross section of the furnace with a convection unit inside. The convection unit includes blower casing (BC) and two blower outlets (BAD) directly blow convection air into the air boxes (AB) as shown in sections A-A and C-C. One matrix (M) includes in this case at least two nozzle boxes (NB) behind the matrixes. The thermocouples (TC) are needed for all matrixes. Perforated plate (PP) is included in air boxes to prevent dynamic air pressure. A better design of this is shown as (PPE) perforated plate design.

The rollers (R) move the glass (G). The blower return space (BRS) as blower suction chamber is an enclosed box. The only way out for air are the nozzles under the convection unit. The only way in for air is from between the nozzle boxes.

The furnace air does not interfere or mix with the convection air at all. The convection suction is located all under the convection unit. This is a good feature for the process.

The end cover plate (CPE) - "E" means convection unit ends, placed between the convection units and furnace doors, lengthwise the furnace. The air boxes there are connections directly to the nozzle boxes (NB).

There is nothing to be served in blower return space. It can be a fully enclosed box. Not even "doors" are needed in the cover plates (CPE).

The arrows (RA) indicate the convection air return flow from between the nozzle boxes and air boxes, too.

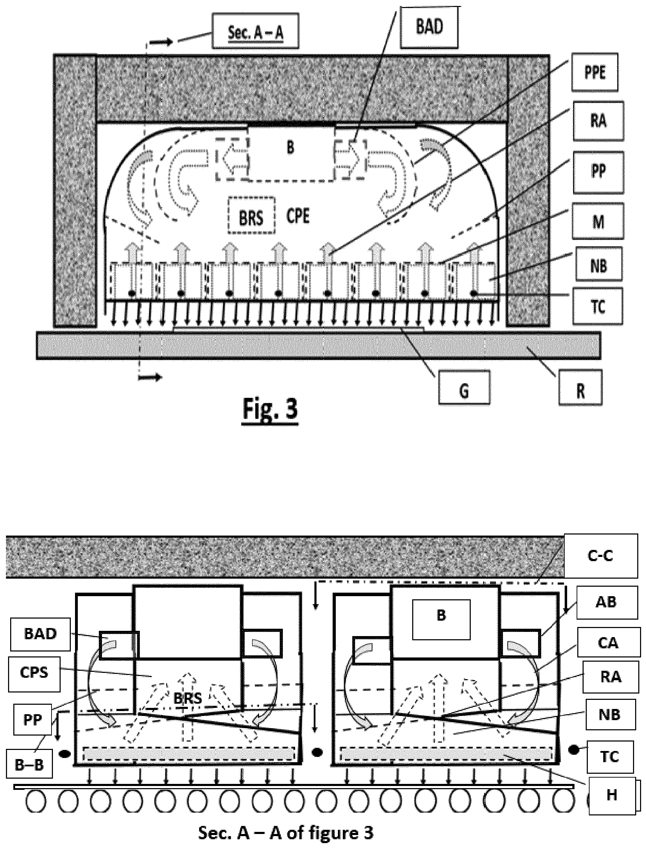

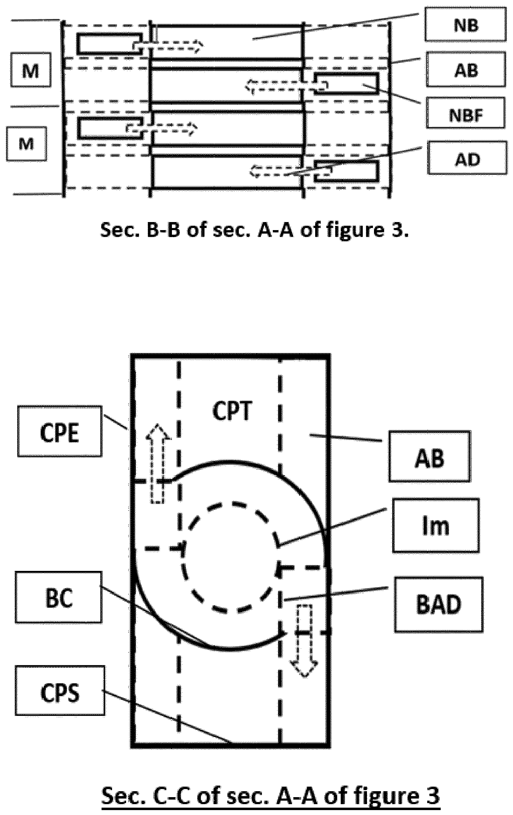

Section A- A of Fig. 3 shows two convection units. One air box would also work but would require a more complicated and expensive arrangement. It is better to use two of them. They deliver air to several nozzle boxes as shown. It saves a lot compared to ducts to each nozzle box individually. All the nozzle boxes are identical. The arrows (RA) indicate return air flow from back to the blower return space (BRS).

The electric motor for blower and shaft and thermocouple and electric wires are not shown in the figure. The side cover plate (CPS) covers the air delivery return space (BRS) from the sides. Mark (PP) indicates the perforated plate. The section B-B of Fig. 3 explains further why two air boxes are a practical arrangement.

Section B-B of Fig. 3 indicates how inexpensive and easy it is to deliver convection air from the air box (AB) directly to the nozzle boxes (NB). The nozzle box air feed opening is (NBF). In the opening it is good to use a perforated plate to eliminate the dynamic air pressure directly on to the nozzles. The arrow (AD) means the obvious air direction moving in the nozzle box. Matrixes (M) include two nozzle boxes.

The sec. C - C of sec. A - A of Fig. 3 is the top view of one convection unit. It describes the arrangement above the convection unit. If the blower has a speed range up to about 1500 rpm. its outside dimensions are not easily located in the length of the matrix, (convection unit). Air box is marked with (AB). The blower casing (BC) and impeller (Im) together form a blower. (BC) in this description really blower casing. The cover plates (CPE) and (CPS) makes an enclosed box at four sides of it. Top cover plate (CPT), the blower casing (BC) and air boxes do the same at top of the convection unit. Both nozzle box type, Fig. 1 and Fig 2 can be used but they should be installed into an angle to the glass travel direction. The reason is the to avoid optical problems in the glass.

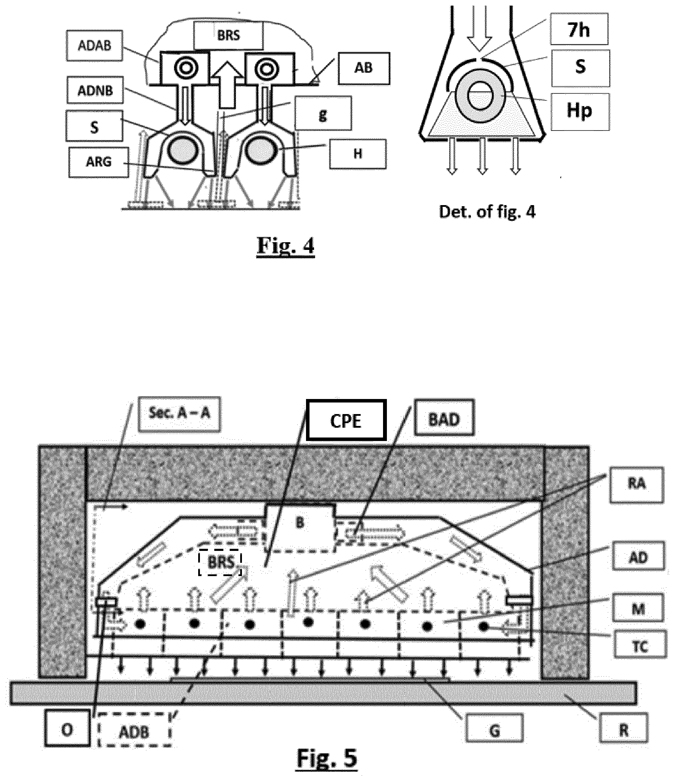

Fig. 4 is a cross section of one matrix with two nozzle boxes and heaters. Duct (ADAB) takes air from 1 or 2 air boxes. This describes an efficiency improvement of the convection in two ways.

Firstly the narrow ducts (ADNB) take the convection air to the nozzle boxes (NB) in a very uniform manner. This would increase the heat transfer area of the heat transfer plate (S) above the heaters (H). The result is higher convection air temperature.

Secondly the convection air congestion in between the glass and nozzles is bad for efficiency. The congestion can be reduced when suction under and near the air return gap (ARG) is increased.

This happens when the air return gap is narrow (g). This naturally means higher under pressure, (a small vacuum) inside of the blower return space (BRS). The phenomenon is based on the Bernoulli system from 17th century. The practical vacuum in blower return space is 7 % +/- 3 % of the blower air delivery pressure depending on the total open area of the air return gaps (ARG). Theoretically much higher vacuums are possible. On the other hand, the Bernoulli equation is practically always valid. However, it starts to cause proper suction only when vacuum is over 3% of the air delivery pressure. Naturally the blower suction opening always has a small vacuum when the blower operates.

The air box (AB) shows the bottom line of the air box. The air from the air boxes to nozzle boxes is explained under sec. A-A and C-C of Fig 3.

This allows the wider nozzle boxes and/or convection efficiency, (capacity) is increased. The pipe nozzles would increase the convection efficiency further. Fig. 1 type nozzle boxes could also be used as an alternative.

Detail of Fig. 4 describes one more heat transfer improvement possibility. It is based on the Coanda effect, also invented by Bernoulli. If there is a small gap or a row of holes (7h) in the heat transfer plate (S) above the center line of heaters, the air flow would remain touched on the heater pipe and heating wires near the pipe. This would increase the heat transfer from the ceramic pipe itself and the heater wires around it. An additional requirement for this is that the heaters should be so-called porcupine heaters. The best would be that the heater wires would be wound like a coil spring type of heaters, diameter 10 - 15 mm. Later this would be wound on ceramic pipe. The outer diameter of the "coil spring" type heart wires would still radiate strong. This could be used also for heaters as shown in Fig. 1 and Fig. 2.

Fig. 5 shows another type to use the Bernoulli system for the convection efficiency improvement. The pressurized air delivery box (ADB) covers basically all the area of the convection unit. It is behind the matrixes (M). The arrows (RA) mean the return air flow.

Fig. 6 describes detail of Fig. 5. The under pressure, (vacuum) starts from the blower return chamber (BRS) through air return pipes (ARP) and it enters into the air return space (ARS) which has a large cross section. This maintains the suction good at the whole length of the air return gap (ARG) and effective suction, too.

The section A-A of Fig. 5 explains a small alternative to blower return space (BRS). This is sometimes useful. The air delivery box (ADB) is excluded from the figure. There are two rows of the air return pipes (ARP) passing through the air delivery box. The cover plate (CPE) has openings (Ho) above every matrix and thermocouple. Now, according to the Bernoulli equation a small part of the return air flow (RAp) returns through holes (Ho). In this case the thermocouples measure the return air flow temperature which is also a very good indication of the glass temperature. Small pipes (O) suck small amount of the return air flow from between the furnace walls and the convection unit.

It could also be used for Fig. 4 solution.

Fig. 6 describes a side view and section of one type of convection unit. The nozzle boxes are parallel to the rollers. The heaters are inserted into the nozzle boxes preferably from two sides of the furnace walls.

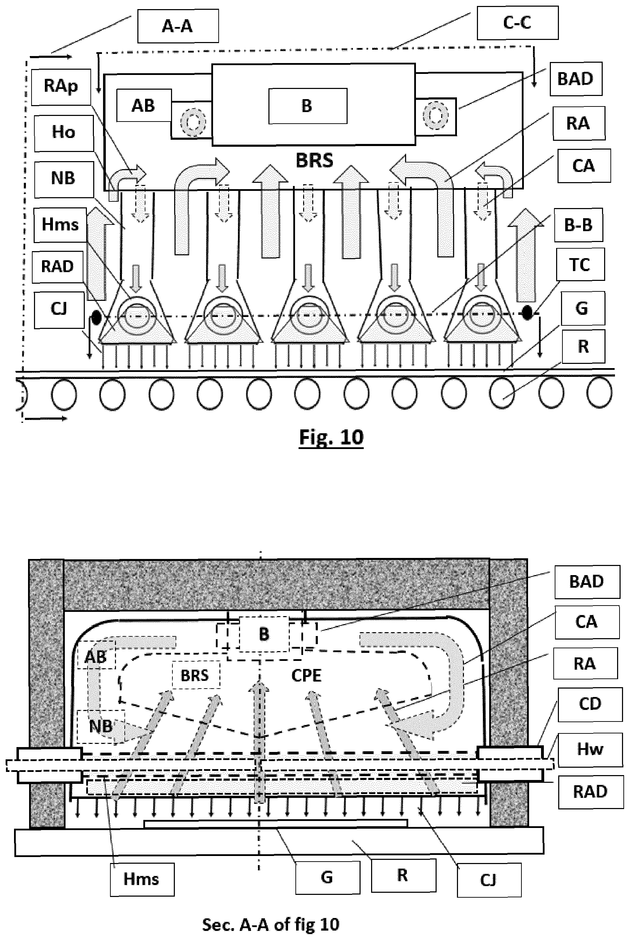

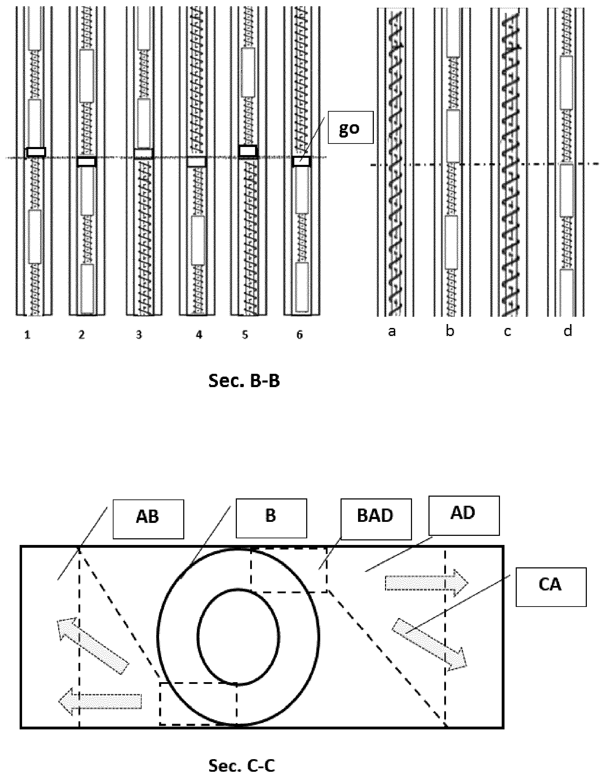

The blower blows into the air boxes as per Fig 10, sec. C-C. Matrix heaters (Hm) keep the glass temperature across the furnace width at the same level. Heaters (H) are the main heaters, which take care of the most heating power.

The maximum heat transfer can be obtained in case we focus convection air (CAf) on the top of the second heat transfer plate (S). Other details are the same.

Sec. A-A of Fig. 6 is a cross section of the furnace with a convection unit inside. The heating wires (Hw) now must be taken out of the furnace at the furnace sides. The dashed arrows describe the air movements inside the convection unit. Closing device (CD) must cover the leakage from the nozzle boxes to inside of the furnace. In the furnace there is a normal pressure or a small vacuum so air sealing from the furnace outside of it is not very important.

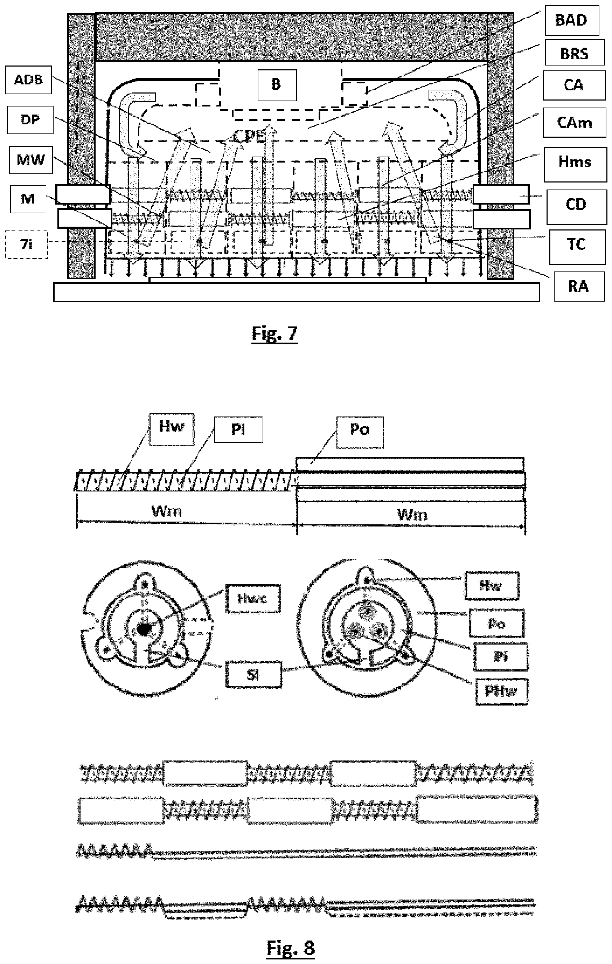

Fig. 7 is similar to the description of Fig. 6 but uses an air delivery box (ADB). The convection air (CAm) is distributed by plate (DP) into the matrixes. It also has nozzle boxes as per figure 6. The open cross section for the air flow (CAm) in the nozzle box must be the same as described later under Fig. 10. There may also be matrix walls (MW) between the matrixes. They cannot work effectively due to the matrix heaters (Hms).

The main difference is in the air flow. Behind the matrixes there is a return air flow space (7i) according to the patent US 9624120. The return air flow is horizontal in the direction of glass movement, preferably in 2 directions. In two ends the convection units the return air (RA) sucked upwards into the blower return space (BRS). The thermocouples (TC) measure the return air flow temperature matrix by matrix either in still air or using hole (Ho) opening or gaps as explained in descriptions of Fig. 5 and fig. 10.

Fig. 8 shows details how to arrange individual heaters of Fig. 7 to Fig. 10. A suitable matrix width (Wm) is about 330 mm. Normally the maximum glass width is 3200 mm so the heating width of ten matrixes is 3300 mm. When the heaters (Hms) are installed inside of the furnace from two sides, five matrixes cover the length of 5 x 330 mm = 1650 mm. There are two (2) or three (3) heating lengths (= matrix width) in half of the heating width of the furnace.

The system includes two pipes, inner pipe (Pi) and outer pipe (Po). The outer pipe has an inside diameter say 2 mm higher than the outside diameter of inner pipe. The heating wire inside diameter is about 2 mm higher than the outside diameter of the inner pipe. All moves easily on each other.

The outer pipe length, for example 330 mm in this case, does not heat. The maximum number of heating widths in half of the heating width is therefore three (3). Each heater needs two wires. One wire can be common to all three heaters, (Hwc). The outer pipe has grooves in inside diameter which can easily hold three wires, or more if needed. The inner pipe (Pi) has a slot (Sl) so that one heating wire straight portion can be outside of the inner pipe.

If a wire is broken, the heaters can be taken out of the furnace. All parts, starting from the sidemost parts, can be detached. The wire, which is broken, can be welded or connected to a common rod (Hwc). After this the heater (Hms) is assembled.

There is an alternative. The outer pipe outside diameters is useful to be about 150 mm. Inside diameter 120 - 130 mm. The inside diameter of the inner pipe could be about well over 80 mm. The wires can be isolated from each other inside of the inner pipe. The wire diameters are about 5 mm. The pipes (PHw) can have inside diameter 10 mm and outside 15 - 20 mm. There is more than enough room. The pipes (PHw) can be much shorter than the matrix width. There can be two to three of them inside of the inner pipe. The electric cables connected to wires should be numbered clearly so that heater wires would be connected to the correct cables.

If the machine width is an odd number of matrixes, there must be at least two different lengths of inner pipe (Pi).

The bottom figures describe the maximum number of heaters, three (3) outer pipes and two (2) wire heaters. Or another way round.

The second lowest figure of Fig. 8 shows an individual heater and its heating length and straight wire length. The wall thickness of the furnace and some extras are needed in addition to the straight length. The straight part can be cut off depending on the matrix which is broken.

The lowest figure of Fig. 8 shows a possibility of two heating widths in one heater wire. For this application a groove or slot should be used in the outer pipe as shown in dashed lines.

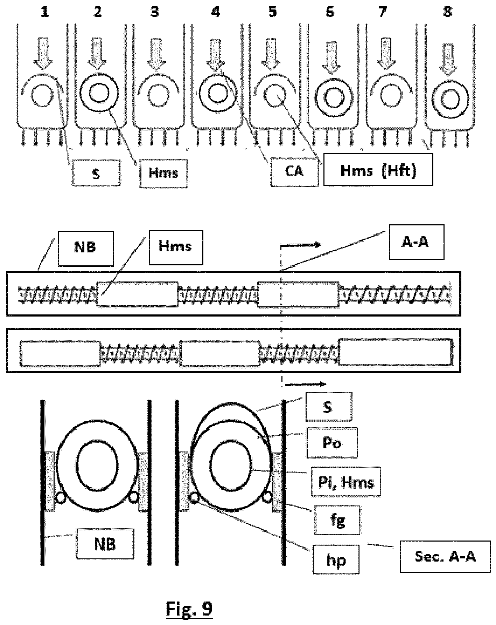

Fig. 9 shows some details which have to be taken into consideration with the novel ideas. Starting from the top. The special matrix heaters (Hms) have heating power on average only half of the full length of the heater. It may be beneficial to include heaters at the full furnace heating width (Hft). They could also be radiating directly to the glass. The matrix heaters (Hms) would still take care of the heating convection air into the matrix configuration. Later more about this in Fig. 10, sec. B-B.

The second figure from the top of Fig. 9 shows how the special matrix heaters are located in nozzle boxes, one after another. Section A-A describes on the left side how the outer pipe (Po) is resting on holding pins (hp). The figure on the right of Fig. 9 shows that the free gap (fg) must be the same at outer pipe and heat transfer plate (S) areas. The supports of holding pins are not shown. There are other types like V plate arrangement, Fig 6 (CAf) but in this case CAf must leave free gap (fg) at least as wide at the location with outer pipe. The accuracy is not very exact, since the thermocouples handle small air flow alterations of the matrixes.

The impingement areas of the convection jets should also be varied from nozzle box to another to avoid the optical problems.

In the case of radiation heating heaters are included a special attention should be paid every part gets the same amount of the radiation. This may be a problem especially in central areas, where the heaters meet each other. One possibility is that the heaters are as wide as the total heating width. About 100 mm diameter pipes are strong enough for over 3 m wide heating width.

Another possibility is that the half length pipes can overlap (go) a little on consecutive nozzle boxes. In actual fact this would make also convection heating more accurate.

Fig. 10 and section A-A includes good combination of the earlier explained.

All the features are behind end cover plate (CPE). Fig. 10 shows one important detail. A small amount of the convection air (RAp) passes from a row of holes (Ho) at the ends of convection unit. This hole can be also a gap or gaps which are at least nearly as wide the free space in blower return space (BRS) in between air boxes (AB). The furnace door ends of the convection unit require a plate in between the thermocouples and the doors. Otherwise the thermocouples do not show the correct temperature readings.

All heaters fig 10 and in section A-A are special matrix heaters (Hms) in one horizontal row. This is the simplest solution as shown in section B-B, heaters 1 and 2. This includes in the center area the overlap design.

Heater arrangement 3 to 6 shows the suitable arrangement with half of the heating width radiation heaters. In actual fact six (6) nozzle boxes could be the correct number in one convection unit. The heaters 1, 3, 4 and 6 would be special matrix heaters and 2 and 5 would be radiation type heaters. The radiation heaters 2 and 5 could overlap (go) each other crisscross.

The heaters arrangement a-d show with the system with the full heating width radiation heaters. Also optimum arrangement could be as above with 6 nozzle boxes.

The air box (AB) inside walls form on two sides the walls of the blower return space (BRS). The are preferred to be in the ends of the nozzle boxes although only one air box could also be possible.

The combination of the high capacity, good and cost effective convection heating for glass are as follows:
- Effective heating with heat transfer plate and secondly mixing with very hot radiation heated air either inside of the nozzle box or outside of the nozzle box by convection jets passing through the radiation heated air and impinging on the radiation heated glass surface;
- Convection heating air is heated into the matrix configuration;
- Effectiveness improved by all the return air flow coming from under the nozzles, (not from easiest direction of the blower intake). Furthermore, this can be increased by effective suction based on Bernoulli equation;
- The possibility of radiation heating without loss of capacity;
- The convection and radiation can be adjusted practically any proportion;
- The thermocouples are not affected by any disturbances which would interfere by their correct readings. They read the temperature matrix by matrix either in still air or the air coming from each matrix sone by one;
- The convection air is circulated by the convection unit itself. It does not mix the furnace air or outside air;
- Inexpensive manufacturing with air boxes (AB) which saves a lot of fabrication of ducts and makes the connection of the blower and nozzle boxes very easy.

List of details abbreviations in alfabetic order named in the description and drawings:
7h - row of holes
7i - return air flow space
AB - air box
AD - arrow indicating air direction moving in the nozzle box
ADAB - duct
ADB - pressurized air delivery box
ADNB - narrow duct
ARG - air return gap
ARP - air return pipe
ARS - air return space
BAD - blower outlet
BC - blower casing
BRS - blower return space, blower return chamber
CA - convection air
CAf - Convection Air funnel arrangement
CAm - air flow
CD - closing device
CJ - convection jet
CPE - end cover plate
CPS - side cover plate
CPT - top cover plate
Fg - free gap
G - glass
G - glass
g - narrow air return gap
go - heaters overlap
H - heater
Hft - furnace heating width
Hm - matrix heaters
Hms - heater, special matrix heater
Ho - openings in cover plate, hole in the end of convection unit
Hp - holding pins
Hw - heating wires
Hwc - wire common for all heters, common rod
Im - impeller
M - matrix
MW - matrix wall
NB - nozzle box
NBF - nozzle box air feed openig
NO - nozzle
O - small pipes
OP - "face" of the nozzle box
PHw - pipes
Pi - inner pipe
Po - outer pipe
PP - perforated plate
PPE - perforated plate design
R - rollers
RA - arrow to indicate the convection air return
RA - return air
RAD - radiation heated part, radiation heated area
RAp - return air flow
S - part, heat transfer plate
Sl - slot in inner pipe
TC - thermocouples
Wm - matrix width

## Claims

1. A heating process of the convection air (CA) in which the convection air is heated by heater (H), **characterized in that** the heater (H) heats a heat transfer plate (S) and a convection air is heated by convection through the heat transfer plate (S) and then the convection air (CA) passes through a radiation heated high temperature convection air (RAD) in which convection air is heated to a higher temperature and mixes with the radiation heated air.

2. A glass heating method according to the claim 1, **characterized in that** the heater (H) radiates downwards and sides (RAD) inside of a nozzle box (NB) and the convection air (CA) is mixed in radiation heated air and hot convection jets (CJ) pass through nozzles (NO) on to a glass (G).

3. The glass heating method according to the claim 1, **characterized** that a convection jets (CJ) pass through the radiation heated area (RAD), get heated further, grasp very hot radiation heated air with them and impinge on a radiation heated glass (G) surface.

4. The glass heating method according to the claims 1 to 3, **characterized in that** the heat transfer plate (S) may include at the top part of it small holes or gap(s) (7h) and a part of the convection air is heated by ceramic pipe and porcupine heater (Hp) wires close to the ceramic pipe and outer part of the porcupine heaters radiates heat all around heater.

5. The glass heating method according to the claims 1 to 4, **characterized in that** all the convection air return flow (RA) returns back to a blower return space (BRS) from under the convection unit.

6. A glass heating machine according to the claim 2, **characterized in that** the nozzle box (NB) includes a heater (H) and above it is located a heat transfer plate (S) and a face part (OP) includes nozzles (NO) and is made of the sheet metal.

7. The glass heating machine according to the claim 3, **characterized in that** the face part of the nozzle box (NB) includes a hollow type place for the heater (H) and at least on one side of the heater there are nozzles (NO) which direct the convection jets (CJ) under the heater (H).

8. The glass heating machine according to the claims 6 to 7, **characterized in that** a blower return space (BRS) is an enclosed box at each four sides and the top.

9. The glass heating machine according to the claims 6 to 8, **characterized in that** there is at least one air box (AB) which delivers convection air (CA) into the or at least half of the nozzle boxes (NB) of one convection unit.

10. The glass heating machine according to the claims 8 to 9, **charcterized** in that there is an under pressure in the blower return space (BRS) and this vacuum is maintained substantially the same level until the air return gaps (ARG).

11. The glass heating machine according to the claim 10, **characterized in that** there is a horizontal plate above the discharge points of the convection nozzles and the plate covers basically the whole area of the convection unit and in the plate there are openings and above the plate there is an air return channel (7i) substantially the same width as the plate and at least in one end of the air return channel there is a large gap which takes the convection return air flow into the blower return space (BRS).

12. The glass heating machine according to the claim 10 to 11, **characterized in that** there are holes (Ho) or a wide gap(s) at least in one of the convection unit in end cover plates (CPE) which take part of the convection air return flow (Rap), which is no more than 1/4 of the return air total flow (RA).

13. The glass heating machine according to the claims 6 to 12, **characterized in that** there are several heaters in nozzle boxes (NB) which are parallel to the rollers and they have at least one heating length the same as the matrix width (Wm).

14. The glass heating machine according to the claim 13, **chracterized** in that the heaters include long and thin pipes (Pi) and the shorter and larger diameter pipes (Po).

15. The glass heating machine according to the claim 14, **characterized in that** the total length of the all the heaters overlap (go) in the centerline of the convection unit.
